# EUROPÄISCHE PATENTSCHRIFT

(11) **EP 0 866 317 B1**
(45) Veröffentlichungstag und Bekanntmachung des Hinweises auf die Patenterteilung: **10.01.2001**
(21) Anmeldenummer: 98810201.8
(22) Anmeldetag: 10.03.1998
(51) Int. Cl.: G01F 1/00, G01F 1/84

(54) **Verfahren zum Fixieren eines Metallkörpers auf einem Messrohr eines Coriolis-Massedurchflussaufnehmers**
Method of fastening a metal body to a measuring tube of a Coriolis-type mass flow sensor
Procédé de fixation d'un corps métallique sur un tube de mesure d'un capteur de débit massique selon Coriolis

(30) Priorität: 17.03.1997 EP 97104484
(43) Veröffentlichungstag der Anmeldung: 23.09.1998
(73) Patentinhaber: Endress + Hauser Flowtec AG, CH-4153 Reinach BL 1 (CH)
(72) Erfinder: Bitto, Ennio, 4147 Äsch (BL) (CH); Lorenz, Rainer, 79540 Lörrach (DE)
(74) Vertreter: Morstadt, Volker, Dipl.-Ing.

(56) Entgegenhaltungen:
- EP-A- 0 702 213
- GB-A- 2 261 837
- US-A- 3 745 633

## Beschreibung

Die Erfindung betrifft ein Verfahren zum Fixieren eines Metallkörpers auf einem Außenumfang eines geraden, aus Titan oder Zirconium bestehenden Meßrohrs eines Coriolis-Massedurchflußaufnehmers, welcher Metallkörper eine Umfangsfläche und eine dem Außenumfang angepaßte Bohrung aufweist. Ein solcher Metallkörper wirkt mit einer Erregeranordnung oder mit einer Sensoranordnung zusammen oder dient als eine Auslegermasse oder als Endstück des Meßrohrs.

Mit Coriolis-Massedurchflußmessern lassen sich bekanntlich der Massedurchfluß und/oder die Dichte eines Fluids messen, das in einer Rohrleitung strömt, in die der Coriolis-Massedurchflußaufnehmer eingesetzt ist. Eine spezielle Art derartiger Massedurchflußaufnehmer, auf die sich die Erfindung bezieht, hat ein einziges, gerades Meßrohr. Dieses besteht zur Erzielung eines ausreichenden Betriebstemperaturbereichs des Massedurchflußaufnehmers aus Titan oder Zirconium, nicht jedoch aus Edelstahl.

Das Meßrohr wird von der oben erwähnten Erregeranordnung in Schwingungen versetzt. Wenn der Massedurchflußaufnehmer von einem Fluid durchströmt wird, wirken auf das Meßrohr Corioliskräfte ein. Dadurch schwingt der fluid-einlaß-seitige Teil des Meßrohrs phasenverschoben gegenüber seinem fluid-auslaß-seitigen Teil. Diese Phasenverschiebung ist bekanntlich ein Maß für den momentanen Massedurchfluß. Die momentane Dichte des Fluids ist bekanntlich proportional zur momentanen Schwingfrequenz des Meßrohrs und kann daher ebenfalls gemessen werden.

Die Phasenverschiebung wird mittels, z.B. zwei, Sensoranordnungen abgegriffen, von denen eine auf der Seite des fluid-einlaß-seitigen Teils des Meßrohrs und eine auf der Seite des fluid-auslaß-seitigen Teils des Meßrohrs angeordnet ist.

Bei handelsüblichen Coriolis-Massedurchflußaufnehmern mit dem erwähnten einzigen Meßrohr wurden die Metallkörper bisher mit dem Meßrohr verlötet oder verschweißt, was ein bei einer hohen Temperatur vorzunehmender Prozeßschritt ist. Dieser führt zu einer, insb. lokalen, Erhitzung des Meßrohrs.

Die Erhitzung bewirkt eine deutliche Verminderung der Streckgrenze des Materials des Meßrohrs aus Titan oder Zirconium, bei Titan z.B. von 800 N/mm² auf 500 N/mm². Daraus resultiert eine Verminderung der zulässigen Axialspannung und daher eine Verminderung des Betriebstemperaturbereichs des Coriolis-Massedurchflußaufnehmers.

Eine Aufgabe der Erfindung besteht daher darin, ein Verfahren zur Fixierung eines Metallkörpers auf einem Meßrohr eines Coriolis-Massedurchflußaufnehmers anzugeben, das keinen Erhitzungsprozeß, wie z.B. Löten oder Schweißen, benötigt.

Zur Lösung der Aufgabe besteht die Erfindung in einem Verfahren zum Fixieren eines mit einer Erregeranordnung zusammenwirkenden oder mit einer Sensoranordnung zusammenwirkenden oder als Auslegermasse eines Coriolis-Massedurchflußaufnehmers dienenden, eine Umfangsfläche aufweisenden Metallkörpers auf einem Außenumfang eines einzigen, geraden, aus Titan oder Zirconium bestehenden Meßrohrs des Coriolis-Massedurchflußaufnehmers, welcher Metallkörper eine dem Außenumfang des Meßrohrs angepaßte Bohrung aufweist, bei welchem Verfahren der Metallkörper auf das Meßrohr aufgeschoben und anschließend dadurch auf dieses bei Umgebungstemperatur aufgepreßt wird, daß auf mindestens einen Teil der Umfangsfläche ein zum Fixieren ausreichender, jedoch das Lumen des Meßrohrs an der Fixierstelle praktisch nicht einengender Druck ausgeübt wird.

In der GB-A 22 61 837 ist ein Verfahren beschrieben zum Fixieren eines eine konische oder zylindrische Umfangsfläche aufweisenden Metallkörpers auf einem Außenumfang eines Endes eines Metallrohrs, welcher Metallkörper eine dem Außenumfang angepaßte Bohrung aufweist, bei welchem Verfahren der Metallkörper auf das Metallrohr aufgeschoben und anschließend in einem Gesenk solange auf dieses aufgepreßt wird, bis im Falle der konischen Umfangsfläche diese zylindrisch und das Ende des Metallsrohrs konisch ist oder im Falle der zylindrischen Umfangsfläche der Durchmesser des Endes des Metallrohrs kleiner als ursprünglich geworden ist.

In der US-A 37 45 633 ist eine Metallpresse zum Fixieren einer eine Sechskant-Umfangsfläche aufweisenden Magnesium-Anode auf einem Außenumfang eines Endes eines Metallrohrs beschrieben, welche Magnesium-Anode eine dem Außenumfang des Metallrohrs angepaßte Bohrung aufweist und auf das Metallrohr aufgeschoben und anschließend in einem Gesenk bei ca. 175 °C bis 260 °C auf das Metallrohr aufgepreßt wird.

Nach einer ersten bevorzugten Ausgestaltung der Erfindung ist das Meßrohr kreiszylindrisch.

Nach einer zweiten bevorzugten Ausgestaltung der Erfindung, ist der Metallkörper eine Metallscheibe.

Nach einer dritten bevorzugten Ausgestaltung der Erfindung, die auch bei der ersten oder der zweiten Ausgestaltung anwendbar ist, ist der Metallkörper eine kreisringförmige Metallscheibe, auf deren gesamte Umfangsfläche der Druck ausgeübt wird.

Nach einer vierten bevorzugten Ausgestaltung der Erfindung weist der Metallkörper eine vorgegebene Dicke im Bereich der Bohrung und einen dazu dünneren Fortsatz auf und der Druck wird auf über den dünneren Fortsatz hervorstehende Teile des Metallkörpers ausgeübt.

Ein wesentlicher Vorteil der Erfindung besteht u.a. darin, daß auf einen Löt- oder Schweißprozeß zur Fixierung des Metallkörpers auf dem Meßrohr verzichtet werden kann, da es durch die Einwirkung des Druckes zu einer sehr stabilen mechanischen Verbindung zwischen Meßrohr und Metallkörper kommt. Diese ist so fest, daß sie auch durch lange andauernde Drehschwingungen des Meßrohrs nicht gelöst werden kann.

Dadurch, daß bei der Erfindung darauf geachtet wird, daß sich das Lumen des Meßrohrs an der Stelle, wo der Metallkörper fixiert wurde, praktisch nicht eingeengt wird, wird sichergestellt, daß keine Ablagerungen im Meßrohr sich bilden können, was einen Druckverlust bewirken könnte.

Die Erfindung wird nun anhand der Figuren der Zeichnung näher erläutert, in der - teilweise perspektivisch - verschiedene Ausführungsbeispiele dargestellt sind und in der gleiche Teile mit denselben Bezugszeichen bezeichnet sind.
- Fig. 1 zeigt: perspektivisch einen auf einem nur teilweise dargestellten kreiszylindrischen einzigen Meßrohr eines Coriolis-Massedurchflußaufnehmers fixierten kreisscheiben-förmigen Metallkörper,
- Fig. 2 zeigt: perspektivisch einen auf einem nur teilweise dargestellten kreiszylindrischen einzigen Meßrohr eines Coriolis-Massedurchflußaufnehmers fixierten quadratscheiben-förmigen Metallkörper,
- Fig. 3 zeigt: perspektivisch einen auf einem nur teilweise dargestellten kreiszylindrischen einzigen Meßrohr eines Coriolis-Massedurchflußaufnehmers fixierten kreisscheiben-förmigen, einen Fortsatz aufweisenden Metallkörper,
- Fig. 4 zeigt: teilweise im Schnitt eine Längsansicht eines ersten Coriolis-Massedurchflußaufnehmers mit fixierten Metallkörpern, und
- Fig. 5 zeigt: teilweise im Schnitt eine Längsansicht eines zweiten Coriolis-Massedurchflußaufnehmers mit fixierten Metallkörpern.

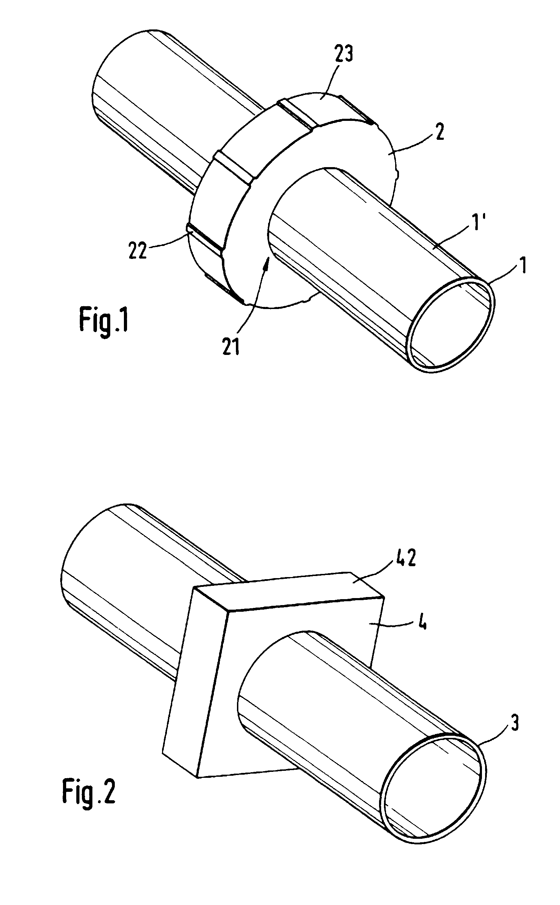

Fig. 1 zeigt perspektivisch und ausschnittsweise ein kreiszylindrisches einziges Meßrohr 1, das Teil eines Coriolis-Massedurchflußaufnehmers ist und in dessen Verlauf ein kreisscheiben-förmiger Metallkörper 2 auf einem Außenumfang 1' des Meßrohrs 1 fixiert worden ist.

Hierzu wird nach dem Verfahren der Erfindung der Metallkörper 2, der eine dem Außenumfang des Meßrohrs 1 angepaßte Bohrung 21 und eine Umfangsfläche 22 aufweist, zunächst auf das Meßrohr 1 bis an den vorgesehenen Fixierort aufgeschoben; in Fig. 1 ist das die Mitte des Meßrohrs 1.

Anschließend wird der Metallkörper 2 mittels einer nicht dargestellten Maschine dadurch auf das Meßrohr 1 aufgepreßt, daß auf mindestens einen Teil der Umfangsfläche 22 ein zum Fixieren ausreichender Druck ausgeübt wird. Dieser wirkt radial nach innen und wird von mehreren flächig an der Umfangsfläche 22 anliegenden Backen der Maschine ausgeübt. Es wird nur ein solcher Druck ausgeübt, daß das Lumen des Meßrohrs 1 an der Fixierstelle praktisch nicht eingeengt wird.

Im fixierten Zustand, wie er in Fig. 1 dargestellt ist, zeigt die Umfangsfläche 22 an den Anliegeflächen der Backen Vertiefungsflächen 23, die geringfügig tiefer liegen als diejenigen Teile der Umfangsfläche 22, auf die der Druck nicht eingewirkt hat. Dies ist ein Zeichen dafür, daß es an der Umfangsfläche 22 zu plastischen Verformungen gekommen ist.

In Fig. 2 ist der Zustand gezeigt, nachdem auf einem einzigen kreiszylindrischen Meßrohr 3 ein quadratscheiben-förmiger Metallkörper 4 wiederum etwa in der Mitte fixiert worden ist. Dies wurde im wesentlichen so vorgenommen, wie es aus der Erläuterung der Fig. 1 hervorgeht. Die Backen der Maschine, die den Druck auf die Umfangsflächen 42 des Metallkörpers 4 ausüben, liegen nun bevorzugt auf deren gesamten Flächen an, so daß keine Vertiefungsflächen sichtbar sind. Wiederum wird nur ein solcher Druck ausgeübt, daß das Lumen des Meßrohrs 3 an der Fixierstelle praktisch nicht eingeengt wird.

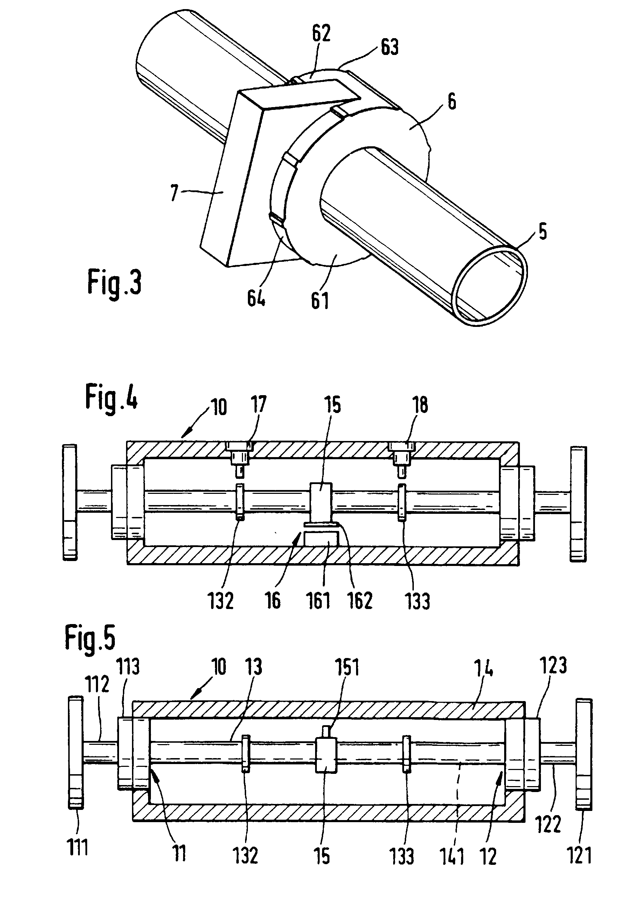

Fig. 3 zeigt ein Beispiel dafür, daß der Metallkörper, anstatt kreis- oder quadratscheiben-förmigen zu sein, auch jede andere geeignete geometrische Form haben. Nach Fig. 3 ist auf einem kreiszylindrischen Meßrohr 5 ein kreisscheiben-förmiger Metallkörper 6 etwa in der Mitte fixiert worden, der einen Fortsatz 7 aufweist.

Dies wurde im wesentlichen so vorgenommen, wie es aus der Erläuterung der Fig. 1 hervorgeht. Die Backen der Maschine, die den erforderlichen Druck auf die Umfangsflächen 62 des Metallkörpers 6 ausüben, liegen auf dem vorderen Kreisscheibenteil 61 und dem hinteren Kreisscheibenteil 63 des Metallkörpers 6 an, so daß es nun wieder zu Vertiefungsflächen 62, 64 gekommen ist.

Die teilweise geschnittenen Längsansichten der Fig. 4 und 5 zeigen einen Coriolis-Massedurchflußaufnehmer 10, der im Benutzungsfall in den Verlauf einer von einem zu messenden Fluid durchströmten, aus Übersichtlichkeitsgründen jedoch nicht dargestellten Rohrleitung eines gegebenen Durchmessers einzufügen und mit ihr vor der Inbetriebnahme fluiddicht zu verbinden ist.

In den Fig. 4 und 5 sind zu diesem Zweck entsprechende Flansche 111, 121 dargestellt, die über ein jeweiliges kurzes Rohrstück 112, 122 mit einem jeweiligen Endstück 113, 123 verbunden sind, in das bzw. in dem ein Einlaßende 11 und ein Auslaßende 12 eines einzigen geraden Meßrohrs 13 jeweils mündet und darin fixiert ist. Anstatt über die Flansche 111, 121 kann der Massedurchflußaufnehmer 10 auch über andere übliche Befestigungsmittel in die Rohrleitung eingefügt werden.

Einlaßende 11 und Auslaßende 12 des Meßrohrs 13 sind an einem Träger fixiert, der z.B. in der Form eines offenen oder geschlossenen Rahmens oder eines zylindrischen Rohres 14 ausgebildet sein kann. Der geschlossene Rahmen oder das zylindrische Rohr 14 umgeben das Meßrohr 13 vollständig nach Art einer Umhüllung. Das Meßrohr 13 und die Endstücke 113, 123 sind durch das Verfahren der Erfindung aneinander fixiert worden.

In der Mitte zwischen den Endstücken 113, 123 ist am Meßrohr 13 ein kreisscheiben-förmiger Metallkörper 15 nach dem Verfahren der Erfindung fixiert worden, der mit einer Erregeranordnung 16 zusammenwirkt, die etwa in der Mitte zwischen den Endstücken 113, 123 angeordnet ist. Sie ist z.B. ein elektromagnetischer Erreger, der beispielsweise eine am Träger bzw. am Rohr 14 befestigte Spulenanordnung 161 und einen am Metallkörper 15 befestigten Dauermagneten 162 umfaßt.

Als Erregeranordnung können die für diesen Zweck im Stand der Technik von Coriolis-Massedurchflußaufnehmern und Coriolis-Massedurchflußmessern beschriebenen verschiedenen Arten von Erregeranordnungen dienen. Mittels der Erregeranordnung 16 wird das Meßrohr 13 im Betrieb zu Biegeschwingungen erregt, deren Frequenz gleich der momentanen mechanischen Resonanzfrequenz des Meßrohrs, durch das das Fluid fließt, ist.

In Fig. 5 hat der Metallkörper 15 einen Fortsatz 151, wie dies auch schon in Fig. 3 dargestellt wurde. Der Fortsatz dient als Auslegermasse, wie sie in der älteren EP-Anmeldung 97 81 0059.2 ausführlich beschrieben ist.

In den Fig. 4 und 5 ist ferner ein erster und ein zweiter Sensor 17, 18 für die einlaß- bzw. die auslaßseitigen Bewegungen des Meßrohrs 13 schematisch dargestellt, der im gleichen Abstand zwischen dessen Mitte und dem einlaß- bzw. dem auslaßseitigen Endstück 113 bzw. 123 angeordnet ist. Auf dem Meßrohr 13 befindet sich am Ort des jeweiligen Sensors ein weiterer kreisringförmiger Metallkörper 132, 133, der nach dem Verfahren der Erfindung dort fixiert worden ist und der mit dem Sensor 17, 18 zusammenwirkt.

Als Sensoren 17, 18 können die für diesen Zweck im Stand der Technik von Coriolis-Massedurchflußaufnehmern und Coriolis-Massedurchflußmessern beschriebenen verschiedenen Arten von Sensoren dienen, wie z.B. Weg-, Geschwindigkeits-oder Beschleunigungssensoren, die z.B. elektrodynamisch oder optisch arbeiten.

Das Metall des Metallkörpers kann von dem des einzigen Meßrohrs, das aus Titan oder Zirconium besteht, verschieden sein, insb. kann der Metallkörper aus nichtrostendem Stahl bestehen.

## Patentansprüche

1. Verfahren zum Fixieren eines mit einer Erregeranordnung (16) zusammenwirkenden oder mit einer Sensoranordnung (17, 18) zusammenwirkenden oder als Endstück (113, 123) dienenden oder als Auslegermasse eines Coriolis-Massedurchflußaufnehmers dienenden, eine Umfangsfläche aufweisenden Metallkörpers (15; 132, 133; 151) auf einem Außenumfang eines einzigen, geraden, aus Titan oder aus Zirconium bestenden Meßrohrs (13) des Coriolis-Massedurchflußaufnehmers, welcher Metallkörper (15; 132, 133; 151) eine dem Außenumfang des Meßrohrs angepaßte Bohrung aufweist, bei welchem Verfahren der Metallkörper auf das Meßrohr aufgeschoben und anschließend dadurch auf dieses bei Umgebungstemperatur aufgepreßt wird, daß auf mindestens einen Teil der Umfangsfläche ein zum Fixieren ausreichender, jedoch das Lumen des Meßrohrs an der Fixierstelle praktisch nicht einengender Druck ausgeübt wird.

2. Verfahren nach Anspruch 1, bei dem das Meßrohr kreiszylindrisch ist.

3. Verfahren nach Anspruch 1 oder 2, bei dem der Metallkörper eine Metallscheibe ist.

4. Verfahren nach den Ansprüchen 1 und 2, bei dem der Metallkörper eine kreisringförmige Metallscheibe ist und auf die gesamte Umfangsfläche der Druck ausgeübt wird.

5. Verfahren nach Anspruch 1, bei dem der Metallkörper eine vorgegebene Dicke im Bereich der Bohrung und einen dazu dünneren Fortsatz (7) aufweist sowie bei dem der Druck auf über den dünneren Fortsatz hervorstehende Teile (61, 63) des Metallkörpers ausgeübt wird.

## Claims

1. A method of fastening a metal body (15; 132, 133; 151), having a circum-ferential surface, to an outer circumference of a single straight measuring tube (13), consisting of titanium or zirconium, of a Coriolis-type mass flow sensor, which metal body has a bore adapted to the outer circumference and cooperates with an exciter arrangement (16) or with a sensor arrangement (17, 18) or serves as a cantilever mass or as an end piece (113, 123) of the measuring tube, in which method the metal body is pushed on to the measuring tube and is subsequently pressed on to the latter at ambient temperature in such a way that a pressure sufficient for fastening but not reducing substantially the lumen of the measuring tube at the fastening position is exerted on at least part of the circumferential surface.

2. A method according to claim 1 wherein the measuring tube is circularly cylindrical.

3. A method according to claim 1 or 2 wherein the metal body is a metal plate.

4. A method according to claims 1 and 2 wherein the metal body is an annular metal plate on whose entire circumferential surface the pressure is exerted.

5. A method according to claim 1 wherein the metal body has a prescribed thickness in the region of the bore and an extension (7) which is thinner than that, and the pressure is exerted on parts (61, 63) of the metal body which project over the thinner extension.

## Revendications

1. Procédé pour fixer un corps métallique (15 ; 132, 133 ; 151) comportant une surface circonférentielle, sur une circonférence extérieure d'un unique tube de mesure (13) droit, en titane ou en zirconium, du capteur de débit massique à effet Coriolis, corps métallique qui fonctionne en association avec un dispositif d'excitation (16) ou avec un dispositif (17, 18) à capteurs ou qui sert d'embout (113, 123) ou qui sert de masse en porte-à-faux d'un capteur de débit massique à effet Coriolis, lequel corps métallique (15 ; 132, 133 ; 151) comprend un perçage adapté à la circonférence extérieure du tube de mesure, procédé au cours duquel le corps métallique est déplacé sur le tube de mesure puis appliqué par pression sur ce tube de mesure, à température ambiante, de façon telle qu'une pression suffisante pour effectuer la fixation, ne réduisant cependant pratiquement pas l'ouverture du tube de mesure au niveau de l'emplacement de fixation, est exercée sur au moins une partie de la surface circonférentielle.

2. Procédé selon la revendication 1, dans lequel le tube de mesure est de forme cylindrique circulaire.

3. Procédé selon la revendication 1 ou 2, dans lequel le corps métallique est un disque métallique.

4. Procédé selon les revendications 1 et 2, dans lequel le corps métallique est un disque métallique en forme d'anneau circulaire et où la pression est appliquée sur toute la surface circonférentielle.

5. Procédé selon la revendication 1, dans lequel le corps métallique a une épaisseur prédéterminée dans la zone du perçage et, en outre, un prolongement (7) plus mince, procédé au cours duquel la pression est appliquée sur le prolongement plus mince par des parties saillantes (61, 63) du corps métallique.
